(19) Europäisches Patentamt
European Patent Office
Office européen des brevets

(11) EP 0 630 695 B1

(12) **EUROPÄISCHE PATENTSCHRIFT**

(45) Veröffentlichungstag und Bekanntmachung des Hinweises auf die Patenterteilung:
16.07.1997 Patentblatt 1997/29

(51) Int. Cl.$^6$: **B09B 3/00**, A62D 3/00

(21) Anmeldenummer: 94201444.0

(22) Anmeldetag: 24.05.1994

(54) **Verfahren zur Aufbereitung kontaminierter Böden**

Process for the treatment of contaminated soils

Procédé de traitement de sols contaminés

(84) Benannte Vertragsstaaten:
AT DE FR GB

(30) Priorität: 12.06.1993 DE 4319535

(43) Veröffentlichungstag der Anmeldung:
28.12.1994 Patentblatt 1994/52

(73) Patentinhaber: METALLGESELLSCHAFT AKTIENGESELLSCHAFT
60323 Frankfurt am Main (DE)

(72) Erfinder:
• Poetsch, Günther
  D-65468 Trebur (DE)
• Schumm, Bruno
  D-63110 Rodgau 1 (DE)

(56) Entgegenhaltungen:
EP-A- 0 185 831          EP-A- 0 313 116
EP-A- 0 325 159          EP-A- 0 432 812
WO-A-92/09377

• AUFBEREITUNGS TECHNIK, Bd.33, Nr.9, September 1992, WIESBADEN DE Seiten 501 - 514 U. SCHNEIDER 'Über Grundlagen und Praxis des Bodenwaschens'

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Dekontaminierung von Böden, Halden oder dergl., die durch Kohlenwasserstoffe, Öle, andere organische oder anorganische Verbindungen oder Schwermetall verunreinigt sind, wird immer dringender, ist aber auch sehr aufwendig und schwierig. Der Gehalt der Böden an mineralischen Bestandteilen liegt über 60 Gew.-%, in den meisten Fällen über 70 Gew.-%. Die Verunreinigungen befinden sich vorwiegend an der Oberfläche der Körner und sind meistens schwer- oder nicht wasserlöslich.

Aus der EP-A-313 116 ist ein Verfahren bekannt, bei dem die kontaminierten Böden durch Agitation in einer wäßrigen Aufschlämmung in einer Trommel unter Zusatz von losen Brocken nach Art von Mahlkörpern mit einer Netto-Energieaufnahme von 4 bis 16 kWh/t Durchsatz und mit einer Drehzahl von 50 bis 90 % der kritischen Drehzahl von

$$n_{krit} = \frac{42{,}4}{\sqrt{D}} \quad (min^{-1})$$

behandelt werden, die aus der Trommel ausgetragene wäßrige Aufschlämmung durch Siebung bei etwa 1 bis 2 mm in eine gröbere und eine feinere Fraktion getrennt wird, die gröbere Fraktion als gereinigte Fraktion abgeführt wird, die feinere Fraktion entschlämmt wird, und der abgetrennte Schlamm nach einer Entwässerung als Schadstoffkonzentrat abgeführt wird, sodann der entschlämmte Rest der feineren Fraktion in einer Flotation behandelt wird, und das Schaumprodukt als Schadstoffkonzentrat abgeführt wird, während der Unterlauf nach einer Entwässerung als gereinigter Boden abgeführt wird. Die Böden können auch in der Weise behandelt werden, daß sie zunächst in einer ersten Trommel mit einer Netto-Energieaufnahme von 1 bis 6 kWh/t Durchsatz behandelt werden, die ausgetragene wäßrige Aufschlämmung in eine gröbere und eine feinere Fraktion getrennt wird, wobei die gröbere Fraktion als gereinigter Boden abgeführt wird, und die feinere Fraktion entschlämmt wird, während der abgetrennte Schlamm als Schadstoffkonzentrat abgeführt wird, der entschlämmte Rest der feineren Fraktion in einer zweiten Trommel mit dem eingangs beschriebenen Parameter behandelt wird, und die aus der zweiten Trommel ausgetragene wäßrige Aufschlämmung analog der eingangs beschriebenen feineren Fraktion aus der Trommel behandelt wird. Bei diesem Verfahren enthält das Schadstoffkonzentrat noch beträchtliche Mengen an mineralischem Feinstkorn.

Aus der EP-A-432 812 ist es bekannt, kontaminierte Böden in Form einer wäßrigen Aufschlämmung in einem Druckgehäuse als Schicht auf eine gasdurchlässige Unterlage aufzubringen, Wasserdampf mit einer Temperatur von 100 bis 190°C und einem Druck von 1 bis 12 bar in das Druckgehäuse einzuleiten, durch die Schicht zu leiten, und den aus der Schicht austretenden Dampf aus dem Druckgehäuse abzuleiten und zu kondensieren. Das Kondensat wird einer Reinigung zugeführt und der behandelte Feststoff als gereinigter Boden abgeführt. Die Schicht wird dabei zunächst entwässert, wobei das Kapillarwasser ausgetrieben wird und praktisch kein Gas durch die Schicht durchtritt. Nach der Entwässerung strömt Dampf durch die Schicht, Wasserdampf kondensiert in der Schicht, die Schicht wird aufgeheizt und nach Aufheizung auch des unteren Teiles der Schicht erfolgt ein voller Dampfdurchgang. Da die Aufschlämmung kein grobes Korn enthalten darf, wird Grobkorn über etwa 2 mm und vorzugsweise über etwa 1 mm vorher entfernt. Die Entfernung von Grobkorn erfolgt insbesondere nach dem eingangs beschriebenen Verfahren EP-A-313 116.

Der Erfindung liegt die Aufgabe zugrunde, die Menge des anfallenden Schadstoffkonzentrates noch wesentlich zu verringern.

Die Lösung dieser Aufgabenstellung erfolgt erfindungsgemäß durch ein Verfahren zur Aufbereitung kontaminierter Böden, bei dem die kontaminierten Böden in einer Trommel in einer Aufschlämmung unter Zusatz von losen Brocken nach Art von Mahlkörpern mit einer Netto-Energieaufnahme (Energieaufnahme im gefüllten Zustand minus der Energieaufnahme im Leerzustand) von 1 bis 16 kWh/t Durchsatz und mit einer Drehzahl von 50 bis 90 % der kritischen Drehzahl ($n_{krit}$) von

$$n_{krit} = \frac{42{,}4}{\sqrt{D}} \quad (min^{-1})$$

behandelt werden, wobei gilt: D = Durchmesser der Trommel in m und die aus der Trommel ausgetragene Aufschlämmung in eine Feinfraktion mit einer Korngröße unter etwa 1 mm und eine Grobfraktion mit einer Korngröße über etwa 1 mm getrennt wird, das dadurch gekennzeichnet ist, daß

a) die Feinfraktion in einen gerührten Pufferbehälter geleitet wird,

b) die Grobfraktion auf eine Korngröße unter etwa 1 mm gemahlen und dann in den Pufferbehälter geleitet wird,

c) Suspension aus dem Pufferbehälter in einen gerührten Vorlagebehälter geleitet wird, durch Zugabe von Lösungsmittel eine Suspension mit einem Feststoffgehalt von 200 bis 800 g/l hergestellt wird,

d) die Suspension aus dem Vorlagebehälter in einem Druckgehäuse als Schicht auf die Filterunterlage eines Filters aufgebracht wird, Wasserdampf mit einer Temperatur von 100 bis 300°C und einem Druck von 1 bis 12 bar in das Druckgehäuse eingeleitet und durch die Schicht geleitet wird, das aus der Filterunterlage austretende Filtrat und Dampfkondensat aus dem Druckgehäuse abgeleitet werden, und der aus der Filterunterlage austretende Dampf kondensiert und als Kondensat abgeleitet wird, der Filterkuchen aus dem Druckgehäuse ausgeschleust wird,

e) im Trog des Filters gemäß (d) eine zusätzliche Bewegung in der Suspension erzeugt wird,

f) der ausgeschleuste Filterkuchen in einen gerührten Ansetzbehälter geleitet wird, unter Zugabe von Lösungsmittel eine Suspension mit einem Feststoffgehalt von 200 bis 800 g/l hergestellt wird, und die Suspension erneut in das Druckgehäuse gemäß (d) geleitet wird,

g) der Filterkuchen nach der Behandlung gemäß (g) als Reinboden abgeführt wird,

h) das Filtrat und Kondensat gemäß (d) und (f) gekühlt und in einen Absetzbehälter geleitet wird,

i) der abgeschiedene Feststoff aus dem Absetzbehälter erneut in das Druckgehäuse gemäß (d) und/oder (f) eingeleitet wird,

j) die mit Schadstoffen beladene Flüssigkeit in einer Lösungsmittel-Rückgewinnung von den Schadstoffen befreit und wieder in den Prozeß zurückgeführt wird, und

k) die abgetrennten Schadstoffe entsorgt werden.

Der Ausdruck "Böden" wird für alle Materialien verwendet, die sich durch das Verfahren aufbereiten lassen. Die losen Brocken nach Art von Mahlkörpern können aus arteigenem und/oder nicht-arteigenem natürlichem und/oder künstlichem stückigem Material bestehen. Der Einsatz von arteigenen Brocken ist besonders wirtschaftlich, jedoch muß der Trübestand in der Trommel niedriger gehalten werden als beim Einsatz von Stahlkugeln als Brocken, um die notwendige Energie durch die Brocken zu übertragen. Die Zugabe der Brocken in die Trommel erfolgt zweckmäßigerweise so, daß die Energieaufnahme etwa konstant gehalten wird. Stückiges Material in den Böden kann bis zu einer Stückgröße von 200 mm aufgegeben werden. Die Böden werden je nach Beschaffenheit vor der Eingabe in die Trommel durch eine Schrott- oder Stein-Abscheidung geleitet. Die Netto-Energieaufnahme der Trommel ist die auf den Trommelmantel übertragene Energie, d. h., die Energieaufnahme im gefüllten Zustand minus der Energieaufnahme im Leerzustand. Die Netto-Energieaufnahme ist auf den Durchsatz an trockenem Boden bezogen. Der optimale Wert für die Energieaufnahme richtet sich nach der Art des Bodens und den Verunreinigungen. Er wird empirisch ermittelt. "D" ist der Durchmesser der Trommel in Metern. Die Aufschlämmung kann in einem wäßrigen Lösungsmittel, einem organischen Lösungsmittel oder einem anorganischen Lösungsmittel erfolgen. Der Ausdruck "Lösungsmittel" bezeichnet sowohl Flüssigkeiten, in denen sich die Schadstoffe lösen als auch Flüssigkeiten, die nur als Transportmittel für die Schadstoffe dienen. Es können auch beide Arten nebeneinander verwendet werden. Die Auswahl der Lösungsmittel erfolgt in Abhängigkeit von der Art des Bodens und seiner Verunreinigungen. Bei einem mit TNT (Trinitrotoluol) verunreinigten Boden wird z. B. im allgemeinen Wasser als Lösungsmittel verwendet, das als Transportmittel dient. Die Abtrennung der Fein- und Grobfraktion erfolgt zweckmäßigerweise durch Siebung. Der Trennschnitt richtet sich nach der Art des Bodens und seinen Verunreinigungen und wird empirisch ermittelt. Der Ausdruck "etwa 1 mm" bedeutet, daß je nach Boden der Trennschnitt beträchtlich unter 1 mm liegen kann, wenn dies für gute Reinigungswerte erforderlich ist, er kann aber auch z. B. bei 1,3 mm liegen. Der Pufferbehälter hat ein größeres Volumen als die Vorlage- und Ansetzbehälter. Das Mahlen der Grobfraktion erfolgt vorzugsweise in einer autogenen Mühle. Wenn der Feststoffgehalt in der Suspension bei Böden mit sehr feinkörnigem Material unter dem erforderlichen Wert liegt, werden andere Böden oder Zusatzstoffe mit gröberem Material zugegeben. Der in das Druckgehäuse eingeleitete Wasserdampf kann aus Sattdampf oder überhitztem Dampf bestehen. Die Bezeichnung "befreit" gemäß (k) bedeutet, daß die Schadstoffe auf einen für den Prozeß geeigneten Gehalt im rückgeführten Lösungsmittel entfernt werden. Wenn ein Teil des Lösungsmittels aus dem Prozeß abgeleitet wird, wird dieser Teil auf die zulässigen Grenzwerte der Schadstoffe gereinigt. Die Entsorgung der abgetrennten Schadstoffe kann nach bekannten Verfahren erfolgen. Die zusätzliche Bewegung in der Suspension im Trog des Filters kann in bekannter Weise, z. B. durch Rühren, erfolgen. Die Niveauregulierung und damit die Konstanthaltung der Filtrationsbedingungen erfolgt durch einen Überlauf der Suspension. Als Filter können in dem Druckgehäuse Scheibenfilter, Trommelfilter oder Bandfilter verwendet werden. Die nochmalige Behandlung des Filterkuchens in dem Druckgehäuse erfolgt durch wechselweise Schaltungen von Vorlage- und Ansetzbehälter. Zunächst wird der Vorlagebehälter aus dem Pufferbehälter gefüllt. Dann wird der Inhalt des Vorlagebehälters in das Druckgehäuse geleitet und während dieser Zeit der Filterkuchen in den Ansetzbehälter geleitet. Während dieser Zeit erfolgt keine Zugabe aus dem Pufferbehälter. Wenn der Vorlagebehälter entleert ist und der Ansetzbehälter gefüllt ist, wird die Suspension aus dem Ansetzbehälter in das Druckgehäuse geleitet und der Vorlagebehälter wieder aus dem Pufferbehälter gefüllt. Der während dieser Zeit anfallende Filterkuchen wird als Reinboden abgeführt. Wenn der Ansetzbehälter entleert ist, erfolgt wieder eine Einleitung von Suspension aus dem Vorlagebehälter in das Druckgehäuse. Es können auch mehrere Ansetzbehälter hintereinander geschaltet werden und die Behandlung im Druckgehäuse entsprechend wiederholt werden. Der abgeführte Reinboden kann durch Zugabe von Zusatzstoffen, wie z. B. Bentonit, auf den erforderlichen Wasserdurchlässigkeits-Wert (KF-Wert) eingestellt werden. Die Kühlung des Kondensats erfolgt im allgemeinen auf etwa 40 bis 50°C. Die Rückführung des Lösungsmittels in den Prozeß erfolgt über Zwischenbehälter. Die Entsorgung der abgetrennten Schadstoffe kann mit bekannten Verfahren erfolgen. Die Befreiung des Lösungsmittels von Schadstoffen kann in bekannter Weise, z. B. mit Adsorptionsmitteln oder Absorptionsmitteln, erfolgen.

Die Vorteile der Erfindung bestehen darin, daß ein Schadstoffkonzentrat erzeugt werden kann, das praktisch keine mineralischen Bestandteile mehr enthält und dessen Entsorgung dadurch wesentlich vereinfacht wird. Die mineralischen Bestandteile des Bodens können als gereinigter Boden wieder verwendet werden.

Eine Ausgestaltung der Erfindung besteht darin, daß die anfallende Grobfrakion in Schwergut und Leichtgut klassiert wird, das Schwergut der Grobfraktion gemäß (b) auf eine Korngröße unter etwa 1 mm gemahlen wird und in den Pufferbehälter geleitet wird, und das Leichtgut der Grobfraktion entsorgt wird. Das Leichtgut besteht überwiegend aus organischen Stoffen wie Holz, Koks, Papier oder dergl. Diese Stoffe adsorbieren die Verunreinigungen sehr stark. Durch die Abtrennung der Leichtfraktion werden diese Stoffe aus dem Materialfluß herausgenommen und der Entsorgung zugeführt. Diese Arbeitsweise wird insbesondere gewählt, wenn größere Anteile an Leichtgut im Boden vorhanden sind. Die Klassierung in Schwergut und Leichtgut erfolgt gravimetrisch, zweckmäßigerweise auf einem geneigt angeordneten Förderband unter Besprühen mit Flüssigkeit, wobei das Schwergut oben vom Band abgeworfen wird und das Leichtgut auf dem Band nach unten gespült wird und dort von Band abfließt.

Eine Ausgestaltung besteht darin, daß der kontaminierte Boden vor dem Einsatz in die Trommel durch einen Vorbrecher geleitet wird. Diese Arbeitsweise wird angewendet, wenn der Boden größere Anteile von sehr groben Stücken, z. B. über 200 mm Stückgröße enthält. Die Vorbrechung erfolgt dann auf die gewünschte obere Stückgröße, z. B. auf 150 mm.

Eine Ausgestaltung besteht darin, daß das Überkorn aus der aus der Trommel ausgetragenen Aufschlämmung abgetrennt wird, in einem Nachbrecher zerkleinert wird, und in die Trommel zurückgeführt wird. Die günstigste obere Korngröße der Grobfraktion ist abhängig vom jeweiligen Boden und wird empirisch ermittelt. Im allgemeinen liegt sie bei etwa 20 mm. Wenn der Austrag aus der Trommel Überkorn über dieser Größe enthält, wird dieses abgetrennt und in den Nachbrecher geleitet.

Eine Ausgestaltung besteht darin, daß der im Pufferbehälter befindliche Feststoff eine Korngrößenverteilung von $d_{80}$ zwischen 150 bis 400 μm hat. Diese Korngrößenverteilung ergibt besonders gute Reinheitswerte.

Eine Ausgestaltung besteht darin, daß die Suspension im Ansetzbehälter aufgeheizt wird. Dadurch kann bereits vor der Behandlung im Druckgehäuse ein größerer Anteil der Verunreinigungen aus dem Boden gelöst werden.

Eine Ausgestaltung besteht darin, daß als Filter gemäß (d) ein Scheibenfilter verwendet wird. Ein Scheibenfilter ergibt gute Betriebsbedingungen bei relativ kleiner Baugröße.

Eine Ausgestaltung besteht darin, daß die Filtration gemäß (d) unter Zusatz eines Filtrationshilfsmittels erfolgt. Der Zusatz von Flockungsmitteln ergibt besonders gute Bedingungen bei der Filtration.

Eine Ausgestaltung besteht darin, daß die Behandlung gemäß (f) mehrfach hintereinander erfolgt. Dazu werden zwei oder mehrere Ansetzbehälter hintereinander angeordnet und der Filterkuchen jeweils in den folgenden Behälter geleitet und aus diesem in das Druckgehäuse zurückgeleitet. Diese Arbeitsweise hat den Vorteil, daß der bei jedem Durchgang weiter gereinigte Feststoff nicht mit noch stärker verunreinigten Resten im vorhergehenden Ansetzbehälter bzw. dessen Leitungen wieder vermischt wird, wie dies bei mehrmaligem Durchgang durch den Vorlagebehälter und einem Ansetzbehälter der Fall ist.

Eine Ausgestaltung besteht darin, daß die Einstellung der Kuchenstärke auf dem Filter gemäß (d) durch Einstellung der Drehzahl des Filters, des Kuchenbildungs-Winkels und des Differenzdruckes zwischen Druckraum und Kuchenbildungszone erfolgt. Dadurch kann ein dünner Filterkuchen aufgebracht werden und eine ausreichende Zeit für die Dampfbehandlung erzielt werden.

Eine Ausgestaltung besteht darin, daß bei der Behandlung gemäß (d) Wasserdampf mit einer Temperatur von 135 bis 150°C und einem Druck von 2 bis 3 bar in das Druckgehäuse eingeleitet wird. In diesen Bereichen werden besonders gute Betriebsbedingungen erzielt.

Eine Ausgestaltung besteht darin, daß bei einem wäßrigen Lösungsmittel die Entfernung von Schadstoffen gemäß (j) durch Behandlung mit Aktivkohle erfolgt. Vor der Behandlung mit der Aktivkohle wird das Lösungsmittel zweckmäßigerweise in einem rückspülbaren Vorfilter von restlichen Feststoffen weitgehend befreit.

Eine Ausgestaltung besteht darin, daß bei einem organischen Lösungsmittel die Entfernung von Schadstoffen gemäß (j) durch Eindampfen erfolgt, und der Sumpf der Eindampfung über Aktivkohle geleitet wird. Wenn neben dem organischen Lösungsmittel auch ein wäßriges Lösungsmittel vorliegt, ist es zweckmäßig, die beiden Lösungsmittel getrennt aus dem Absetzbehälter gemäß (h) abzuziehen und das wäßrige Lösungsmittel über die Aktivkohle zu leiten.

Eine Ausgestaltung besteht darin, daß bei einem anorganischen Lösungsmittel die Entfernung von Schadstoffen gemäß (j) in einer chemischen Reaktionsstufe erfolgt.

Eine Ausgestaltung der Erfindung besteht darin, daß die beladene Aktivkohle bei Temperaturen von 400 bis 600°C in Anwesenheit von Wasserdampf reaktiviert wird, und das Abgas der Reaktivierung nachverbrannt wird.

Die Reaktivierung der beladenen Aktivkohle kann in einem Drehrohr erfolgen. Die reaktivierte Aktivkohle wird wieder zurückgeführt, wobei Verluste an Aktivkohle durch frische Aktivkohle ausgeglichen werden. Abgetrenntes Leichtgut kann ebenfalls in der Reaktivierungsstufe entsorgt werden. Während der Verarbeitung von Leichtgut erfolgt keine Reaktivierung von Aktivkohle. Das Abgas wird nach der Nachverbrennung zweckmäßigerweise durch einen Wäscher und nachfolgenden Tropfenabscheider geleitet, und das abgeschiedene Kondensat in den Prozeß zurückgeleitet.

Die Erfindung wird anhand einer Figur und eines Beispieles näher erläutert.

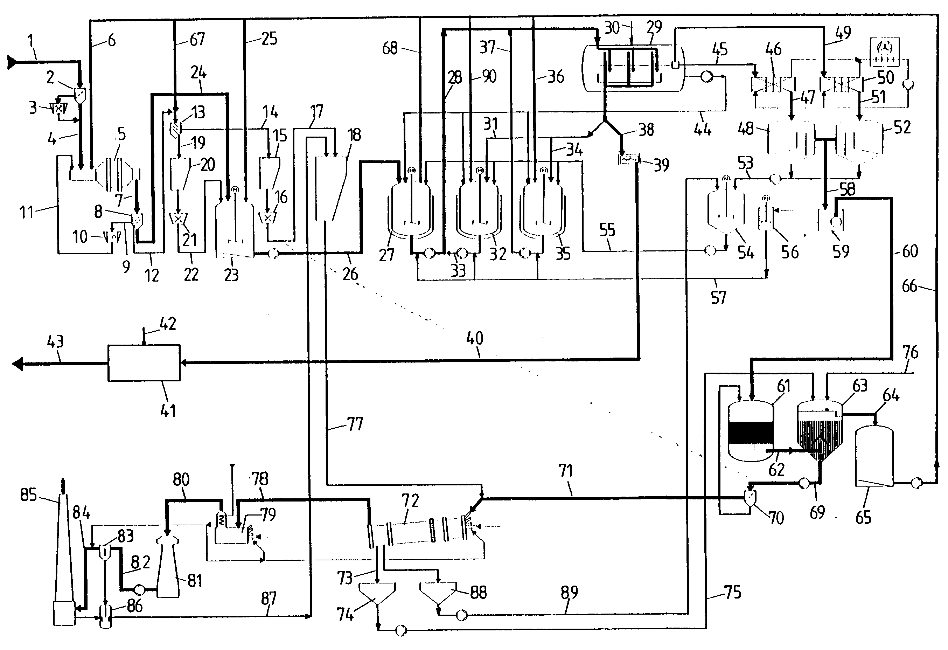

In der Figur wird über Leitung (1) der Boden auf das Sieb (2) aufgegeben. Überkorn wird im Vorbrecher (3) zerkleinert und zusammen mit dem Siebdurchgang über Leitung (4) in die Trommel (5) chargiert. Über Leitung (6) wird Lösungsmittel in die Trommel (5) geleitet. Über Leitung (7) wird die Aufschlämmung aus der Trommel (5) in die Siebstation (8) geleitet. Überkorn wird über Leitung (9) in den Nachbrecher (10) geleitet und über Leitung (11) in die Trommel (5) zurückgeführt. Die Grobfraktion wird über Leitung (12) in die Klassierstufe (13) geleitet. Leichtgut wird über Leitung (14), Zwischenbehälter (15) in die Mühle (16) und über Leitung (17) in den Sammelbehälter (18) geleitet. Schwergut wird über Leitung (19), Zwischenbehälter (20), Mühle (21) und Leitung (22) in den Pufferbehälter (23) geleitet, der mit einem Rührer ausgerüstet ist. Die Feinfraktion wird über Leitung (24) in den Pufferbehälter (23) geleitet. Über Leitung (25) wird Lösungsmittel in den Pufferbehälter (23) eingeleitet. Über Leitung (26) wird Suspension aus dem Pufferbehälter (23) in den Vorlagebehälter (27) geleitet, der mit einem Rührer ausgerüstet ist. Wenn der Vorlagebehälter (27) mit Suspension gefüllt ist, wird die Zufuhr aus dem Pufferbehälter (23) unterbrochen und die Suspension aus dem Vorlagebehälter (27) über Leitung (28) in das Druckgehäuse (29) gepumpt. In dem Druckgehäuse (29) befindet sich ein Scheibenfilter, das nur schematisch dargestellt ist und nicht beziffert ist. Über Leitung (30) wird Dampf in das Druckgehäuse (29) eingeleitet. Der aus dem Druckgehäuse (29) ausgeschleuste Filterkuchen wird über Leitung (31) in den ersten Ansetzbehälter (32) geleitet, der mit einem Rührer ausgstattet ist. Über Leitung (90) wird Lösungsmittel in den Ansetzbehälter (32) geleitet. Wenn der Vorlagebehälter (27) entleert ist und der Ansetzbehälter (32) mit Suspension gefüllt ist, wird die Suspension aus dem Ansetzbehälter (32) über Leitung (33) und Leitung (28) wieder in das Druckgehäuse (29) geleitet. Der ausgeschleuste Filterkuchen wird über Leitung (34) in den zweiten Ansetzbehälter (35) geleitet, der mit einem Rührer ausgerüstet ist. Über Leitung (36) wird Lösungsmittel in den Ansetzbehälter (35) geleitet. Wenn der erste Ansetzbehälter (32) entleert ist und der zweite Ansetzbehälter (35) mit Suspension gefüllt ist, wird die Suspension über Leitung (37) und (28) erneut in das Druckgehäuse (29) gepumpt. Der ausgeschleuste Filterkuchen wird über Leitung (38), Kühler (39) und Leitung (40) in die Boden-Konditionierung (41) geleitet. Nach Zugabe von Zusatzstoffen über Leitung (42) zur Einstellung des Wasserdurchlässigkeits-Wertes wird der Reinboden über Leitung (43) abgesetzt. Aus dem Trog des Filters im Druckgehäuse wird über Leitung (44) überschüssige Suspension jeweils in den Vorlagebehälter (27) oder die beiden Ansetzbehälter (32) und (35) geleitet. Nach der Entleerung wird der Vorlagebehälter (27) mit Suspension aus dem Pufferbehälter (23) gefüllt und ein neuer Zyklus des Filtrierens beginnt. Über Leitung (45) wird das Filtrat aus dem Druckgehäuse (29) in den Kühler (46) geleitet und von dort über Leitung (47) in den Absetzbehälter (48). Über Leitung (49) wird der durch das Filter geströmte Dampf in den Kühler (50) geleitet, und das Kondensat über Leitung (51) in den Absetzbehälter (52) geleitet. Der abgeschiedene Feststoff wird über Leitung (53) in den Zwischenbehälter (54) geleitet, der mit einem Rührer ausgerüstet ist. Aus dem Zwischenbehälter (54) wird der Feststoff über Leitung (55) wahlweise in den Vorlagebehälter (27) oder die Ansetzbehälter (32) und (35) gepumpt. Aus dem Behälter (56), der mit einem Rührer ausgestattet ist, wird Flockungsmittel über Leitung (57) wahlweise zu der Suspension zugegeben, die aus dem Vorlagebehälter (27), dem ersten Ansetzbehälter (32) oder dem zweiten Ansetzbehälter (35) in das Druckgehäuse gepumpt wird. Aus den Absetzbehältern (48) und (52) wird die Suspension über Leitung (58) in die Pumpenvorlage (59) geleitet und von dort über Leitung (60) in das rückspülbare Vorfilter (61) geleitet. Das Lösungsmittel wird über Leitung (62) in das Aktivkohlefilter (63) geleitet und dort von den Schadstoffen weitgehend befreit. Das gereinigte Lösungsmittel wird über Leitung (64) in einen Zwischenbehälter (65) geleitet und von dort über Leitung (66) wahlweise über Leitung (6) in die Trommel (5), Leitung (67) in die Klassierstation (13), Leitung (25) in den Pufferbehälter (23), Leitung (68) in den Vorlagebehälter (27), Leitung (90) in den ersten Ansetzbehälter (32) oder Leitung (36) in den zweiten Ansetzbehälter (35) geleitet. Die beladene Aktivkohle wird aus dem Aktivkohlefilter (63) über Leitung (69) in die Entwässerung (70) und von dort über Leitung (71) in das Drehrohr (72) zur Reaktivierung geleitet. Die reaktivierte Aktivkohle wird über Leitung (73) in den Zwischenbehälter (74) und von dort über Leitung (75) in das Aktivkohlefilter (63) zurückgeleitet. Über Leitung (76) wird der Verlust an Aktivkohle durch Zugabe von frischer Aktivkohle ausgeglichen. Wenn im Drehrohr (72) keine Aktivkohle reaktiviert wird, wird über Leitung (77) aus dem Sammelbehälter (18) Leichtgut in das Drehrohr (72) aufgegeben und dort entsorgt. Das Abgas des Drehrohres (72) wird über Leitung (78) in eine Nachverbrennung (79) geleitet. Das Abgas der Nachverbrennung wird über Leitung (80), Venturiwäscher (81), Leitung (82), Tropfenabscheider (83), Leitung (84) in den Kamin (85) geleitet. Aus dem Kondensatsammelbehälter (86) wird das Kondensat über Leitung (87) in den Sammelbehälter (18) zurückgeleitet. Der bei der Behandlung von Leichtgut im Drehrohr (72) anfallende Feststoff wird über Sammelbehälter (88) und Leitung (89) in den Zwischenbehälter (54) zurückgeleitet.

Beispiel

Die in den Versuchen durchgeführten Verfahrensschritte sind aus der Figur ersichtlich. Die Durchsatzmengen beziehen sich alle auf einer Betriebsdauer von einer Stunde. Der kontaminierte Boden hatte einen Wassergehalt von 20 % und enthielt im Mittel 930 ppm TNT. Der Boden wurde im Vorbrecher auf eine Korngröße <150 mm zerkleinert. 1500 kg des Boden wurden in die Trommel chargiert und mit 1500 kg Wasser versetzt. Die ausgetragene Suspension wurde mittels eines Naßsiebes in 100 kg Überkornfraktion (10 % Wassergehalt) mit einer Korngröße >20 mm, 220 kg Grobfraktion (10 % Wassergehalt) mit einer Korngröße von 1 bis 20 mm und 2680 kg Feinfraktion mit einer Korngröße <1 mm und einem $d_{80}$-Wert des Kornspektrums von 310 μm getrennt. Die Überkornfraktion wurde in dem Nachbrecher auf eine Korngröße <20 mm zerkleinert. Die Grobfraktion wurde in einem Klassierer in 50 kg Leichtgut (50 % Wassergehalt) und 190 kg Schwergut klassiert. Das Schwergut wurde in einer Mühle auf ein Kornspektrum mit einem $d_{80}$-Wert von 310 μm gemahlen und in den Pufferbehälter geleitet. Die Feinfraktion wurde ebenfalls in den Pufferbehälter geleitet. Der Feststoffgehalt in der Suspension wurde auf 600 g/l eingestellt. 2870 kg Suspension wurden aus dem Pufferbehälter in den Vorlagebehälter gepumpt. Die Suspension aus dem Vorlagebehälter wurde in den Trog des Filters im Druckgehäuse gepumpt und unter Zufuhr von 300 kg Dampf filtriert. Aus dem Druckgehäuse wurden 1100 kg Filterkuchen mit 10 % Wasser und 100 ppm TNT in den ersten Ansetzbehälter geleitet und dort unter Zusatz von 1500 kg Wasser zu einer Suspension verrührt. Die Suspension aus dem ersten Ansetzbehälter wurde wiederum in das Druckgehäuse geleitet und unter Zusatz von 300 kg Dampf filtriert. Der ausgetragene Filterkuchen dieser Filtration enthielt 8 ppm TNT und wurde in den zweiten Ansetzbehälter geleitet und dort unter Zusatz von 1500 kg Wasser wiederum zu einer Suspension verrührt. Die Suspension aus dem zweiten Ansetzbehälter wurde nochmals in das Druckgehäuse geleitet und unter Zusatz vom 300 kg Dampf filtriert. Der ausgetragene Filterkuchen dieser Filtration hatte einen TNT-Gehalt von <1 ppm, wurde in dem Feststoffkühler auf eine Temperatur von 40°C gekühlt und aus diesem mit einem Wassergehalt von 10 % ausgetragen. Zur Bildung des Filterkuchens auf dem Filtereinsatz im Druckgehäuse wurden 60 kg anionisches Flockungsmittel als 0,1 %ige Lösung vor dem Eintrag in das Druckgehäuse zudosiert. Das aus dem Druckgehäuse in einer Menge von 1900 kg abgezogene Filtrat sowie der durch das Filter strömende Dampf wurden auf 50°C abgekühlt, in einen Absetzbehälter geleitet und dort 2 Stunden stehengelassen. Nach einer Stunde wurde auf den zweiten Absetzbehälter umgeschaltet. Das in den Absetzbehälter eingeleitete Filtrat enthielt 5 g/l Schlamm. Der aus dem Absetzbehälter abgezogene Schlamm wurde wieder in den Vorlagebehälter zurückgeführt. Die Kühlwassermenge betrug 40000 kg bei einer Erwärmung von 25 auf 35°C. Die Rückkühlung erfolgte mit Hilfe eines Luftkühlers. Der TNT-Gehalt der Filtrat- und Kondensatmischung betrug im Mittel 400 ppm. Das mit den Schadstoffen beladene Prozeßwasser wurde über ein Aktivkohlefilter geleitet und dort so gereinigt, daß der TNT-Gehalt im Prozeßwasser <1 ppm betrug. 23 kg Aktivkohle wurden mit 5 % TNT beladen und zur Reaktivierung in das Drehrohr eingetragen. Die Reaktivierung erfolgte bei einer Temperatur von 600°C und unter Zufuhr von 20 kg Dampf, wobei das TNT in die Gasphase überführt wurde. Das Abgas wurde zur Gasreinigung in einer Nachbrennkammer nachverbrannt und anschließend in einer Waschstufe und einem Gasfilter weiter gereinigt. Bei der Reaktivierung der Aktivkohle entstanden 600 m$^3$ Abgas, die so gereinigt wurden, daß der $NO_x$-Gehalt <200 mg pro m$^3$ und der Staubgehalt im Abgas <10 mg pro m$^3$ betrug.

## Patentansprüche

1. Verfahren zur Aufbereitung kontaminierter Böden, bei dem die kontaminierten Böden in einer Trommel (5) in einer Aufschlämmung unter Zusatz von losen Brocken nach Art von Mahlkörnern mit einer Netto-Energieaufnahme (Energieaufnahme im gefüllten Zustand minus der Energieaufnahme im Leerzustand) von 1 bis 16 kWh/t Durchsatz und mit einer Drehzahl von 50 bis 90 % der kritischen Drehzahl ($n_{krit}$) von

$$n_{krit} = \frac{42,4}{\sqrt{D}} \ (min^{-1})$$

behandelt werden, wobei gilt D = Durchmesser der Trommel in m, und die aus der Trommel (5) ausgetragene Aufschlämmung in eine Feinfraktion mit einer Korngröße unter etwa 1 mm und eine Grobfraktion mit einer Korngröße über etwa 1 mm getrennt wird,
dadurch gekennzeichnet, daß

a) die Feinfraktion in einen gerührten Pufferbehälter (23) geleitet wird,

b) die Grobfraktion auf eine Korngröße unter etwa 1mm gemahlen und dann in den Pufferbehälter (23) geleitet wird,

c) die Suspension aus dem Pufferbehälter (23) in einen gerührten Vorlagebehälter (27) geleitet wird, durch Zugabe von Lösungsmittel eine Suspension mit einem Feststoffgehalt von 200 bis 800 g/l hergestellt wird,

d) die Suspension aus dem Vorlagebehälter (27) in einem Druckgehäuse (29) als Schicht auf die Filterunterlage eines Filters aufgebracht wird, Wasserdampf mit einer Temperatur von 100 bis 300°C und einem Druck von 1 bis 12 bar in das Druckgehäuse (29) eingeleitet und durch die Schicht geleitet wird, das aus der Filterunterlage austretende Filtrat und Dampfkondensat aus dem Druckgehäuse (29) abgeleitet werden, und der aus der Filterunterlage austretende Dampf kondensiert und als Kondensat abgeleitet wird, der Filterkuchen aus dem Druckgehäuse (29) ausgeschleust wird,

e) im Trog des Filters gemäß (d) eine zusätzliche Bewegung in der Suspension erzeugt wird,

f) der ausgeschleuste Filterkuchen in einen gerührten Ansetzbehälter (35) geleitet wird, unter Zugabe von Lösungsmittel eine Suspension mit einem Feststoffgehalt von 200 bis 800 g/l hergestellt wird, und die Suspension erneut in das Druckgehäuse (29) gemäß (d) geleitet wird,

g) der Filterkuchen nach der Behandlung gemäß (f) als Reinboden abgeführt wird,

h) das Filtrat und KOndensat gemäß (d) und (f) gekühlt und in einen Absetzbehälter geleitet wird,

i) der abgeschiedene Feststoff aus dem Absatzbehälter erneut in das Druckgehäuse (29) gemäß (d) und/oder (f) eingeleitet wird,

j) die mit Schadstoffen beladene Flüssigkeit in einer Lösungsmittel-Rückgewinnung von den Schadstoffen befreit und wieder in den Prozeß zurückgeführt wird, und

k) die abgetrennten Schadstoffe entsorgt werden.

2. Verfahren nach Anspruch 1, dadurch gekennzeichnet, daß die anfallende Grobfraktion in Schwergut und Leichtgut klassiert wird, das Schwergut der Grobfraktion gemäß (b) auf eine Korngröße unter etwa 1 mm gemahlen wird und in den Pufferbehälter geleitet wird, und das Leichtgut der Grobfraktion entsorgt wird.

3. Verfahren nach Anspruch 1 oder 2, dadurch gekennzeichnet, daß der kontaminierte Boden vor dem Einsatz in die Trommel (5) durch einen Vorbrecher geleitet wird.

4. Verfahren nach einem der Ansprüche 1 bis 3, dadurch gekennzeichnet, daß das Überkorn aus der aus der Trommel (5) ausgetragenen Aufschlämmung abgetrennt wird, in einem Nachbrecher zerkleinert wird, und in die Trommel zurückgeführt wird.

5. Verfahren nach einem der Ansprüche 1 bis 4, dadurch gekennzeichnet, daß der im Pufferbehälter (23) befindliche Feststoff eine Korngrößenverteilung von $d_{80}$ zwischen 150 bis 400 μm hat.

6. Verfahren nach einem der Ansprüche 1 bis 5, dadurch gekennzeichnet, daß die Suspension im Ansetzbehälter (35) aufgeheizt wird.

7. Verfahren nach einem der Ansprüche 1 bis 6, dadurch gekennzeichnet, daß als Filter gemäß (d) ein Scheibenfilter verwendet wird.

8. Verfahren nach einem der Ansprüche 1 bis 7, dadurch gekennzeichnet, daß die Filtration gemäß (d) unter Zusatz eines Filtrationshilfsmittels erfolgt.

9. Verfahren nach einem der Ansprüche 1 bis 8, dadurch gekennzeichnet, daß die Behandlung gemäß (f) mehrfach hintereinander erfolgt.

10. Verfahren nach einem der Ansprüche 1 bis 9, dadurch gekennzeichnet, daß die Einstellung der Kuchenstärke auf dem Filter gemäß (d) durch Einstellung der Drehzahl des Filters, des Kuchenbildungs-Winkels und des Differenzdrucks zwischen Druckraum und Kuchenbildungszone erfolgt.

11. Verfahren nach einem der Ansprüche 1 bis 10, dadurch gekennzeichnet, daß bei der Behandlung gemäß (d) Wasserdampf mit einer Temperatur von 135 bis 150°C und einem Druck von 2 bis 3 bar in das Druckgehäuse eingeleitet wird.

12. Verfahren nach einem der Ansprüche 1 bis 11, dadurch gekennzeichnet, daß bei einem wäßrigen Lösungsmittel die Entfernung von Schadstoffen gemäß (j) durch Behandlung mit Aktivkohle erfolgt.

13. Verfahren nach einem der Ansprüche 1 bis 11, dadurch gekennzeichnet, daß bei einem organischen Lösungsmittel die Entfernung von Schadstoffen gemäß (j) durch Eindampfen erfolgt, und der Sumpf der Eindampfung über Aktivkohle geleitet wird.

14. Verfahren nach einem der Ansprüche 1 bis 11, dadurch gekennzeichnet, daß bei einem anorganischen Lösungsmittel die Entfernung von Schadstoffen gemäß (j) in einer chemischen Reaktionsstufe erfolgt.

15. Verfahren nach Anspruch 12 und 13, dadurch gekennzeichnet, daß die beladene Aktivkohle bei Temperaturen von 400 bis 600°C in Anwesenheit von Wasserdampf reaktiviert wird, und das Abgas der Reaktivierung nachverbrannt wird.

**Claims**

1. A method for dressing contaminated soils in which the contaminated soils are treated in a drum (5) in a slurry with the addition of loose chunks acting in the manner of grinding bodies with a net energy consumption (energy consumption in the filled state, minus the energy consumption in the empty state) of 1 to 16 kWh/tonne throughput and at a speed of rotation of 50-90% of the critical speed ($n_{crit}$) of

$$n_{crit} = \frac{42.4}{\sqrt{D}} \ (min^{-1}),$$

wherein D = diameter of the drum in metres, and the slurry discharged from the drum (5) is separated into a fine fraction having a grain size of below about 1 mm and a coarse fraction having a grain size of above about 1 mm, characterised in that

   a) the fine fraction is passed into a stirred buffer vessel (23),

   b) the coarse fraction is ground to a grain size of below about 1 mm and is then passed into the buffer vessel (23),

   c) the suspension from the buffer vessel (23) is passed into a stirred receptacle (27), and a suspension having a solids content of 200 to 800 g/l is produced by adding solvent,

   d) the suspension from the receptacle (27) is applied as a layer to the filter base of a filter in a pressure housing (29), steam at a temperature of 100 to 300°C and a pressure of 1 to 12 bar is introduced into the pressure housing (29) and is passed through the layer, the filtrate emerging from the filter base and steam condensate from the pressure housing (29) are removed, and the steam emerging from the filter base is condensed and removed as condensate, the filter cake is discharged from the pressure housing (29),

   e) in the trough of the filter of (d) an additional movement is produced in the suspension,

   f) the discharged filter cake is passed into a stirred preparation vessel (35), a suspension having a solids content of 200 to 800 g/l is produced with the addition of solvent, and the suspension is then passed back into the pressure housing (29) of (d),

   g) the filter cake after the treatment according to (f) is removed as clean soil,

   h) the filtrate and condensate of (d) and (f) are cooled and passed into a settling tank,

   i) the solids separated off from the settling tank are re-introduced into the pressure housing (29) of (d) and/or (f),

   j) the liquid laden with pollutants is freed of the pollutants in a solvent recovery stage and is returned into the process, and

   k) the pollutants which have been separated off are disposed of.

2. A method according to Claim 1, characterised in that the coarse fraction produced is sorted into heavy material and light material, the heavy material of the coarse fraction is ground to a grain size below about 1 mm according to (b) and is passed into the buffer vessel, and the light material of the coarse fraction is disposed of.

3. A method according to Claim 1 or 2, characterised in that the contaminated soil is passed through a preliminary crusher before charging into the drum (5).

4. A method according to one of Claims 1 to 3, characterised in that the oversize is separated off from the slurry discharged from the drum (5), is crushed in a secondary crusher and is returned into the drum.

5. A method according to one of Claims 1 to 4, characterised in that the solids located in the buffer vessel (23) have a grain size distribution of $d_{80}$ of between 150 and 400 $\mu$m.

6. A method according to one of Claims 1 to 5, characterised in that the suspension is heated in the preparation vessel (35).

7. A method according to one of Claims 1 to 6, characterised in that a disc filter is used as the filter of (d).

8. A method according to one of Claims 1 to 7, characterised in that the filtration according to (d) is effected with the addition of a filtration aid.

9. A method according to one of Claims 1 to 8, characterised in that the treatment according to (f) is effected several times in succession.

10. A method according to one of Claims 1 to 9, characterised in that the adjustment of the cake thickness on the filter of (d) is effected by adjusting the speed of rotation of the filter, the cake formation angle and the differential pressure between the pressure space and the cake formation zone.

11. A method according to one of Claims 1 to 10, characterised in that upon the treatment according to (d) steam at a temperature of 135 to 150°C and a pressure of 2 to 3 bar is introduced into the pressure housing.

12. A method according to one of Claims 1 to 11, characterised in that in the case of an aqueous solvent the removal of pollutants according to (j) is effected by treatment with activated carbon.

13. A method according to one of Claims 1 to 11, characterised in that in the case of an organic solvent the removal of pollutants according to (j) is effected by evaporation, and the bottom product of the evaporation is passed over activated carbon.

14. A method according to one of Claims 1 to 11, characterised in that in the case of an inorganic solvent the removal of pollutants according to (j) is effected in a chemical reaction stage.

15. A method according to Claims 12 and 13, characterised in that the laden activated carbon is reactivated at temperatures of 400 to 600°C in the presence of steam, and the exhaust gas from the reactivation is after-burned.

**Revendications**

1. Procédé de traitement de sols pollués, qui consiste à traiter les sols pollués en suspension dans un tambour (5), avec addition de gros morceaux lâches à la manière de grains de broyage, avec une absorption nette d'énergie (absorption d'énergie à l'état plein moins absorption de l'énergie à l'état vide) de 1 à 16 kWh/t de débit et avec une vitesse de rotation représentant de 50 à 90% de la vitesse de rotation critique ($n_{krit}$) de

$$n_{krit} = \frac{42,4}{\sqrt{D}} \ (\ min^{-1})$$

D étant le diamètre du tambour en mètres, et à séparer la suspension déchargée du tambour (5) en une fraction fine ayant une granulométrie inférieure à 1 mm environ et en une fraction grossière ayant une granulométrie supérieure à 1 mm environ,
caractérisé en ce que

    a) on envoie la fraction fine dans une cuve (23) tampon où s'effectue un brassage,
    b) on broie la fraction grossière à une granulométrie inférieure à 1 mm environ et on l'envoie ensuite dans la cuve (23) tampon,

    c) on envoie la suspension de la cuve (23) tampon à une cuve (27) collectrice où s'effectue un brassage et, par addition de solvant on prépare une suspension ayant une teneur en matières solides de 200 à 800 g/l,
    d) on charge la suspension de la cuve (27) collectrice dans une enceinte (29) sous pression sous forme de couche sur le support d'un filtre, on envoie de la vapeur d'eau à une température de 100 à 300° C et sous une pression de 1 à 12 bar dans l'enceinte (29) sous pression et à travers la couche, on évacue de l'enceinte (29) sous pression le filtrat sortant du support de filtre et le condensat de vapeur et on condense la vapeur sortant du support de filtre et on l'évacue sous forme de condensat, on fait sortir le gâteau de filtration de l'enceinte (29) sous pression,
    e) on produit dans le bac du filtre suivant (d) un mouvement supplémentaire dans la suspension,
    f) on envoie le gâteau de filtration que l'on a fait sortir dans une cuve (35) de préparation où s'effectue un brassage, on prépare, par addition de solvant, une suspension ayant une teneur en matières solides de 200 à 800 g/l et on envoie à nouveau la suspension dans l'enceinte (29) sous pression suivant (d),
    g) on évacue le gâteau de filtration après le traitement suivant (f) en tant que sol épuré,
    h) on refroidit le filtrat et le condensat suivant (d) et (f) et on les envoie dans une cuve de décantation,
    i) on envoie à nouveau la matière solide séparée de la cuve de décantation dans l'enceinte (29) sous pression suivant (d) et/ou (f),
    j) on débarrasse des substances polluantes le liquide chargé de substances polluantes dans un stade de récupération du solvant et on le retourne au processus, et
    k) on se débarrasse des substances polluantes séparées.

2. Procédé suivant la revendication 1, caractérisé en ce qu'il consiste à fractionner la fraction grossière qui se produit en produit lourd et en produit léger, à broyer le produit lourd de la fraction grossière suivant (b) à une granulométrie inférieure à 1 mm environ et à l'envoyer dans la cuve tampon, et à se débarrasser du produit léger de la fraction grossière.

3. Procédé suivant la revendication 1 ou 2, caractérisé en ce qu'il consiste à envoyer le sol pollué dans un concasseur préalable avant de l'envoyer au tambour (5).

4. Procédé suivant l'une des revendications 1 à 3, caractérisé en ce qu'il consiste à séparer le refus supérieur de la suspension déchargée du tambour (5), à le fragmenter dans un concasseur en aval et à le retourner au tambour.

5. Procédé suivant l'une des revendications 1 à 4, caractérisé en ce que la matière solide se trouvant dans la cuve (23) tampon a une répartition granulométrique $d_{80}$ comprise entre 150 et 400$\mu$m.

6. Procédé suivant l'une des revendications 1 à 5, caractérisé en ce qu'il consiste à chauffer la suspension dans la cuve (35) de préparation.

7. Procédé suivant l'une des revendications 1 à 6, caractérisé en ce qu'il consiste à utiliser comme filtre suivant (d) un filtre à disque.

8. Procédé suivant l'une des revendications 1 à 7, caractérisé en ce que la filtration suivant (d) s'effectue avec addition d'un adjuvant de filtration.

9. Procédé suivant l'une des revendications 1 à 8, caractérisé en ce que le traitement suivant (f) s'effectue plusieurs fois successivement.

10. Procédé suivant l'une des revendications 1 à 9, caractérisé en ce que le réglage de l'épaisseur du gâteau sur le filtre suivant (d) s'effectue par réglage de la vitesse de rotation du filtre, de l'angle de formation du gâteau et la différence de pression entre la chambre sous pression et la zone de formation du gâteau.

11. Procédé suivant l'une des revendications 1 à 10, caractérisé en ce qu'il consiste à envoyer lors du traitement suivant (d) de la vapeur d'eau à une température de 135 à 150°C et sous une pression de 2 à 3 bar dans l'enceinte sous pression.

12. Procédé suivant l'une des revendications 1 à 11, caractérisé en ce qu'il consiste à effectuer, dans le cas d'un solvant aqueux, l'élimination des substances polluantes suivant (j) par traitement par du charbon actif.

13. Procédé suivant l'une des revendications 1 à 11, caractérisé en ce qu'il consiste à effectuer, dans le cas d'un solvant organique, l'élimination des substances polluantes suivant (j) par évaporation, et à envoyer ce qui se trouve dans le bac de l'évaporation sur du charbon actif.

14. Procédé suivant l'une des revendications 1 à 11, caractérisé en ce qu'il consiste à effectuer, dans le cas d'un solvant minéral, l'élimination de substances polluantes suivant (j) dans un stade de réaction chimique.

15. Procédé suivant la revendication 12 ou 13, caractérisé en ce qu'il consiste à réactiver le charbon actif chargé à des températures de 400 à 600°C en présence de vapeur d'eau, et à faire subir ensuite à l'effluent gazeux de la réactivation une post-combustion.

EP 0 630 695 B1